# EUROPEAN PATENT SPECIFICATION

(11) **EP 1 693 123 B1**
(45) Date of publication and mention of the grant of the patent: **22.04.2009**
(21) Application number: 06110092.1
(22) Date of filing: 17.02.2006
(51) Int. Cl.: B09B 1/00, E21B 33/03

(54) **Extraction unit for extracting biogas**
Biogasausscheidungseinheit
Unité d'extraction de bio-gaz

(30) Priority: 22.02.2005 IT BO20050092
(43) Date of publication of application: 23.08.2006
(73) Proprietor: SOGLIANO AMBIENTE S.p.A., 47030 Sogliano al Rubicone (IT)
(72) Inventor: Antonini, Marco, 47023 Cesena (IT); Saragoni, Luciano, 47030 Sogliano al Rubicone (IT)
(74) Representative: Jorio, Paolo

(56) References cited:
- GB-A- 2 091 779
- US-A- 4 971 148
- US-A- 5 380 125
- US-A- 6 044 904

## Description

The present invention relates to an extraction unit for extracting biogas from a mass of waste.

The extraction of biogas produced by natural fermentation of a mass of solid urban waste contained inside a collection pit by means of an extraction unit of the type comprising a feed duct inserted inside the mass of waste and having an outlet, which projects outward from the collection pit, and provided with a first annular flange projecting radially outward from the outer surface of said feed duct is known in the waste disposal sector.

The feed duct is provided with a relative closing device defined by a discharge duct having an inlet connected with the outlet of the feed duct and an outlet connected, normally, with a biogas collection device.

The inlet of the discharge duct is provided with a second annular flange, which projects radially outward from the outer surface of the discharge duct, is arranged in contact with said first flange, and is fixed to said first flange by a plurality of fixing screws evenly distributed around a longitudinal axis of the feed duct.

Known extraction units of the aforesaid type have some drawbacks principally deriving from the fact that the large number of fixing screws, required to guarantee correct coupling between the flanges of the two ducts, cause serious operating difficulties to the operators in charge and relatively long times are required to couple and de-couple the two flanges.

Known extraction units of the aforesaid type also have the further drawback deriving from the fact that the fluid seal of the coupling between the flanges of the two ducts is relatively low and can be the cause of leakage of biogas to the atmosphere.

Document GB 2 091 779 discloses an extraction unit comprising a feed duct, which allows extraction of biogas from a mass of waste, and is provided with an outlet projecting outward from a collection pit of the waste. The outlet is closed by means of a closing device comprising a sleeve coupled in an axially sliding way to the feed duct, and one inflatable chamber sandwiched between the feed duct and the sleeve to axially lock the sleeve on the feed duct.

The object of the present invention is to provide an extraction unit for extracting biogas from a mass of waste which overcomes the aforesaid drawbacks and which is simple and inexpensive to produce.

According to the present invention there is provided an extraction unit for extracting biogas from a mass of waste as claimed in the appended claims.

The present invention will now be described with reference to the accompanying drawings, which show a non-limiting example of embodiment, wherein:
Figure 1 is a schematic longitudinal section of a preferred embodiment of the extraction unit of the present invention mounted in a waste disposal system; and
Figure 2 is a perspective longitudinal section of a detail of the extraction unit in Figure 1.

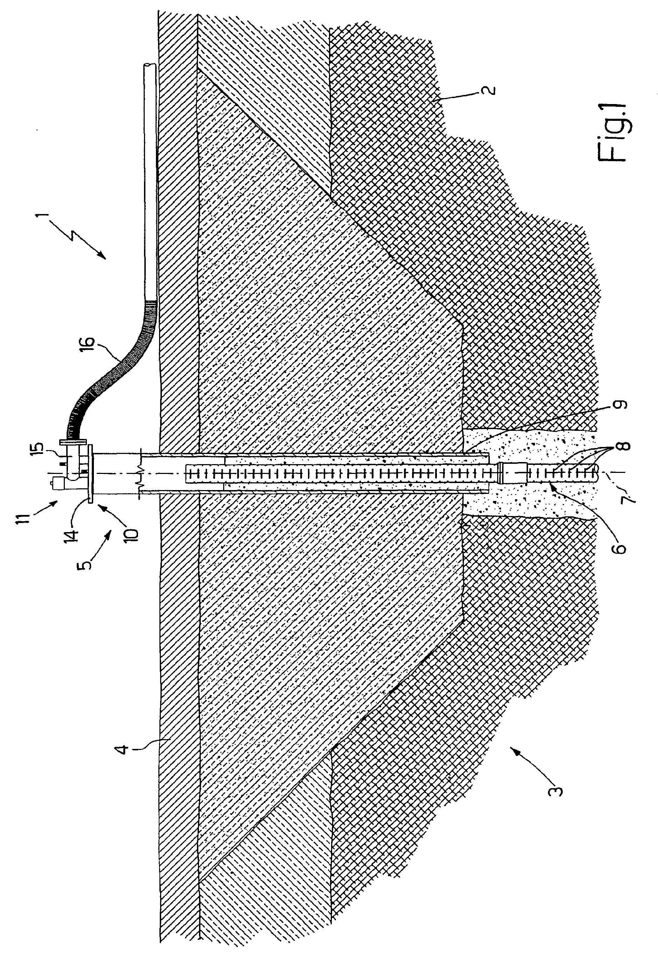

With reference to Figure 1, the numeral 1 indicates, as a whole, a system for the disposal of solid urban waste 2, comprising a pit 3 for collection of the waste, which is essentially cup-shaped with upward facing concavity, and is hermetically closed at the top through a covering layer 4 made of inert material.

Extraction of the biogas produced by natural fermentation of the waste 2 contained inside the pit 3 is performed by means of an extraction unit 5 comprising an internal tubular duct 6 of know type, which has a substantially vertical longitudinal axis 7 perpendicular to the layer 4, extends upward starting from the mass of waste 2 and through the layer 4, and has a plurality of slots 8 produced radially through the duct 6 and distributed along the axis 7.

An upper portion of the duct 6 engages with part of an external tubular duct 9, which is axially staggered with respect to the duct 6, extends through the layer 4, and has an outlet 10, which projects outside the pit 3, and is closed, normally, by a relative closing device 11.

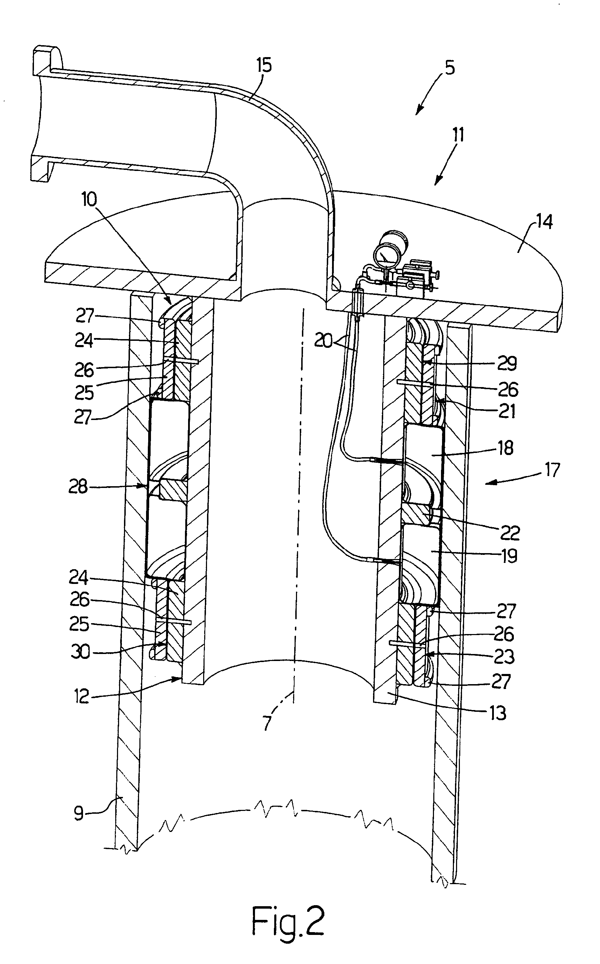

According to Figure 2, the device 11 comprises a tubular discharge duct 12, in turn comprising a lower inlet sleeve 13, which extends inside the duct 9 coaxially to the axis 7, and projects downward from an annular supporting flange 14, which is arranged substantially in contact with the duct 9, extends normal to the axis 7, and projects radially outward from the external surface of an upper outlet union 15 of said duct 12.

In the case illustrated in Figures 1 and 2, the union 15 is an elbow, and is connected to a duct 16 to feed the biogas to a collection device of known type, not shown. According to an alternative not shown, the union 15 is disconnected from the duct 16, and is closed either hermetically by means of a cap of know type or with an active carbon filter for abatement of malodorous substances and subsequent emission of biogas into the atmosphere.

The duct 12 is coupled in an axially sliding way with the duct 9, and is axially locked along the duct 9 by means of a locking device 17 comprising, in this case, a pair of inflatable chambers 18, 19, which are arranged in succession along the axis 7, are fitted on the sleeve 13 coaxial to said axis 7, and are connected to a pneumatic device of known type, not shown, by means of respective pneumatic feed ducts 20 extending inside the sleeve 13.

The upper chamber 18 is locked axially along the axis 7 by an upper spacer element 21 and by an intermediate spacer element 22, which fitted on the sleeve 13, and cooperates with a lower spacer element 23 identical to the element 21 to axially lock the lower chamber 19 along said axis 7.

Each element 21, 23 comprises two annular bodies 24, 25 concentric with each other, which are coupled in a rotating and axially sliding way to the sleeve 13, and are angularly and axially locked together and on the sleeve 13 by a plurality of fixing screws 26 distributed uniformly around the axis 7.

The body 25 extends around the body 24 and is axially limited by two annular flanges 27, which project radially outward from the outer surface of the body 25 and have an external diameter just slightly smaller than the internal diameter of the duct 9 in order to allow the duct 9 and the sleeve 13 to oscillate in a controlled way with respect to each other about an axis of rotation (not shown) transverse to the axis 7.

The closing device 11 comprises, finally, an elastically deformable protective sheath 28, which is fitted on the chambers 18, 19 coaxial to the axis 7 to protect the chambers 18, 19 from the chemical attack of the biogas, and is locked axially along the axis by engagement of an upper edge thereof 29 between the bodies 24, 25 of the upper spacer element 21 and a lower edge thereof 30 between the bodies 24, 25 of the lower spacer element 23.

Operation of the extraction unit 5 is easy to understand from the description above and requires no further explanations.

Naturally, assembly of the closing device 11 on the outlet 10 of the duct 9 is performed by first inserting the lower sleeve 13 inside the duct 9 and then inflating the inflatable chambers 18, 19, while disassembly of the closing device 11 from the outlet 10 of the duct 9 is performed by first deflating the inflatable chambers 18, 19 and then disengaging the discharge duct 12 from the duct 9.

## Claims

1. Extraction unit for extracting biogas from a mass of waste (2), the extraction unit comprising a feed duct (9) for extraction of biogas from said mass of waste (2), the feed duct having a specific longitudinal axis (7) and an outlet (10) projecting outward from a collection pit (3) of the waste (2); and a closing device (11) of said outlet (10), the closing device (11) comprising a sleeve (13) coupled in an axially sliding way to the feed duct (9), and at least one inflatable chamber (18, 19) sandwiched between the feed duct (9) and the sleeve (13) to axially lock the sleeve (13) on said feed duct (9); and being **characterized in that** the closing device (11) comprises, moreover, a protective sheath (28) fitted on at least said inflatable chamber (18, 19) to protect said inflatable chamber (18, 19) from the chemical attack of said biogas.

2. Extraction unit as claimed in claim 1, wherein the sleeve (13) is mounted inside the feed duct (9).

3. Extraction unit as claimed in claim 1 or 2, wherein the closing device (11) comprises, moreover, at least two annular spacer elements (21, 23) sandwiched between the sleeve (13) and the feed duct (9) and locked axially along said longitudinal axis (7); the inflatable chamber (18, 19) being mounted between said spacer elements (21, 23).

4. Extraction unit as claimed in claim 3, wherein each of said spacer elements (21, 23) has a thickness, measured transversely to said longitudinal axis (7), to allow the sleeve (13) and the feed duct (9) to oscillate in relation to each other about an axis of rotation transverse to said longitudinal axis (7).

5. Extraction unit as claimed in any one of the previous claims, wherein the closing device (11) comprises, moreover, at least two annular spacer elements (21, 23) sandwiched between the sleeve (13) and the feed duct (9) and locked axially along said longitudinal axis (7) to axially limit the inflatable chamber (18, 19); each spacer element (21, 23) comprising two annular bodies (24, 25) concentric with each other, which are in substantial contact with each other with interposition of a relative upper (29) or lower (30) edge of said protective sheath (28).

6. Extraction unit as claimed in any one of the previous claims, wherein the closing device (11) comprises a plurality of inflatable chambers (18, 19) arranged in succession along said longitudinal axis (7), and at least one protective sheath (28) fitted on said inflatable chambers (18, 19) to protect the inflatable chambers (18, 19) from the chemical attack of said biogas.

7. Extraction unit as claimed in claim 6, wherein the closing device (11) comprises, moreover, a plurality of annular spacer elements (21, 22, 23) sandwiched between the sleeve (13) and the feed duct (9) and axially locked along said longitudinal axis (7); each inflatable chamber (18, 19) being limited axially by two of said relative spacer elements (21, 22, 23).

8. Extraction unit as claimed in claim 7, wherein each spacer element (21, 23) of at least part of said spacer elements (21, 22, 23) comprises two annular bodies (24, 25) concentric with each other, which are in substantial contact with each other with interposition of an upper (29) or lower (30) edge of said relative protective sheath (28).

9. Extraction unit as claimed in any one of the previous claims and comprising, moreover, a pneumatic supply device communicating with said inflatable chamber (18, 19).

10. Extraction unit as claimed in any one of the previous claims and comprising, moreover, a cap to close said sleeve (13) hermetically.

11. Extraction unit as claimed in any one of claims 1 to 9, wherein the sleeve (13) is connected with a further duct (16) to feed the biogas to a collection device of said biogas.

12. Extraction unit as claimed in any one of claims 1 to 9 and comprising, moreover, a filter device to close the sleeve (13); the filter device being suitable to abate the malodorous substances present in the biogas and to allow emission of the biogas into the outside environment.

## Patentansprüche

1. Extraktionseinheit zum Extrahieren von Biogas aus einer Abfallmasse (2), wobei die Extraktionseinheit umfasst: eine Zufuhrrohrleitung (9) für die Extraktion von Biogas aus der Abfallmasse (2), wobei die Zufuhrrohrleitung eine bestimmte Längsachse (7) und einen aus einem Sammelschacht (3) des Abfalls (2) nach außen vorstehenden Auslass (10) besitzt; und eine Verschlussvorrichtung (11) für den Auslass (10), wobei die Verschlussvorrichtung (11) eine Hülse (13), die mit der Zufuhrrohrleitung (9) axial gleitend gekoppelt ist, und wenigstens eine aufblasbare Kammer (18, 19), die zwischen der Zufuhrrohrleitung (9) und der Hülse (13) angeordnet ist, um die Hülse (13) an der Zufuhrrohrleitung (9) axial zu verriegeln, aufweist; und **dadurch gekennzeichnet, dass** die Verschlussvorrichtung (11) darüber hinaus eine Schutzhülle (28) umfasst, die wenigstens an der aufblasbaren Kammer (18, 19) angebracht ist, um die aufblasbare Kammer (18, 19) vor dem chemischen Einfluss des Biogases zu schützen.

2. Extraktionseinheit nach Anspruch 1, wobei die Hülse (13) in der Zufuhrrohrleitung (9) montiert ist.

3. Extraktionseinheit nach Anspruch 1 oder 2, wobei die Verschlussvorrichtung (11) darüber hinaus wenigstens zwei ringförmige Abstandshalterelemente (21, 23) umfasst, die zwischen der Hülse (13) und der Zufuhrrohrleitung (9) angeordnet und in Richtung der Längsachse (7) axial verriegelt sind; wobei die aufblasbare Kammer (18, 19) zwischen den Abstandshalterelementen (21, 23) montiert ist.

4. Extraktionseinheit nach Anspruch 3, wobei jedes der Abstandshalterelemente (21, 23) gemessen quer zur Längsachse (7) eine Dicke besitzt, um der Hülse (13) und der Zufuhrrohrleitung (9) zu ermöglichen, relativ zueinander um eine Drehachse quer zu der Längsachse (7) zu oszillieren.

5. Extraktionseinheit nach einem der vorhergehenden Ansprüche, wobei die Verschlussvorrichtung (7) darüber hinaus wenigstens zwei ringförmige Abstandshalterelemente (21, 23) umfasst, die zwischen der Hülse (13) und der Zufuhrrohrleitung (9) angeordnet sind und in Richtung der Längsachse (7) axial verriegelt sind, um die aufblasbare Kammer (18, 19) axial zu begrenzen; wobei jedes Abstandshalterelement (21, 23) zwei ringförmige Körper (24, 25) umfasst, die zueinander konzentrisch sind und miteinander unter Einfügung einer relativen Oberkante (29) oder Unterkante (30) der Schutzhülle (28) im Wesentlichen in Kontakt sind.

6. Extraktionseinheit nach einem der vorhergehenden Ansprüche, wobei die Verschlussvorrichtung (11) mehrere aufblasbare Kammern (18, 19) umfasst, die in Richtung der Längsachse (7) nacheinander angeordnet sind, und wenigstens eine Schutzhülle (28), die an den aufblasbaren Kammern (18, 19) angebracht ist, umfasst, um die aufblasbaren Kammern (18, 19) vor dem chemischen Einfluss des Biogases zu schützen.

7. Extraktionseinheit nach Anspruch 6, wobei die Verschlussvorrichtung (11) darüber hinaus mehrere ringförmige Abstandshalterelemente (21, 22, 23) umfasst, die zwischen der Hülse (13) und der Zufuhrrohrleitung (9) angeordnet sind und in Richtung der Längsachse (7) axial verriegelt sind; wobei jede aufblasbare Kammer (18, 19) durch zwei der relativen Abstandshalterelemente (21, 22, 23) axial begrenzt ist.

8. Extraktionseinheit nach Anspruch 7, wobei jedes Abstandshalterelement (21, 23) wenigstens eines Teils der Abstandshalterelemente (21, 22, 23) zwei ringförmige Körper (24, 25) umfasst, die zueinander konzentrisch sind und miteinander unter Einfügung einer Oberkante (29) oder Unterkante (30) der relativen Schutzhülle (28) im Wesentlichen in Kontakt sind.

9. Extraktionseinheit nach einem der vorhergehenden Ansprüche, die darüber hinaus eine Druckluftzufuhrvorrichtung umfasst, die mit der aufblasbaren Kammer (18, 19) kommuniziert.

10. Extraktionseinheit nach einem der vorhergehenden Ansprüche, die darüber hinaus eine Kappe aufweist, um die Hülle (13) hermetisch dicht zu verschließen.

11. Extraktionseinheit nach einem der Ansprüche 1 bis 9, wobei die Hülse (13) mit einer weiteren Rohrleitung (16) verbunden ist, um das Biogas einer Sammelvorrichtung für das Biogas zuzuführen.

12. Extraktionseinheit nach einem der Ansprüche 1 bis 9, die darüber hinaus eine Filtervorrichtung umfasst, um die Hülse (13) zu verschließen, wobei die Filtervorrichtung übel riechende Substanzen, die in dem Biogas vorhanden sind, beseitigen kann und die Emission des Biogases in die äußere Umgebung ermöglichen kann.

## Revendications

1. Unité d'extraction pour extraire un biogaz d'une masse de déchets (2), l'unité d'extraction comprenant un conduit d'alimentation (9) pour l'extraction d'un biogaz de ladite masse de déchets (2), le conduit d'alimentation ayant un axe longitudinal (7) spécifique et une sortie (10) faisant saillie à l'extérieur d'une fosse de collecte (3) des déchets (2) ; et un dispositif de fermeture (11) de ladite sortie (10), le dispositif de fermeture (11) comprenant une gaine (13) accouplée de manière à pouvoir coulisser axialement au conduit d'alimentation (9), et au moins une chambre gonflable (18, 19) intercalée entre le conduit d'alimentation (9) et la gaine (13) pour verrouiller axialement la gaine (13) sur ledit conduit d'alimentation (9) ; et **caractérisée en ce que** le dispositif de fermeture (11) comprend, en outre, une gaine de protection (28) montée au moins sur ladite chambre gonflable (18, 19) pour protéger ladite chambre gonflable (18, 19) de l'attaque chimique dudit biogaz.

2. Unité d'extraction selon la revendication 1, dans laquelle la gaine (13) est montée à l'intérieur du conduit d'alimentation (9).

3. Unité d'extraction selon la revendication 1 ou 2, dans laquelle le dispositif de fermeture (11) comprend, en outre, au moins deux éléments d'espacement (21, 23) annulaires intercalés entre la gaine (13) et le conduit d'alimentation (9) et verrouillés axialement le long dudit axe longitudinal (7) ; la chambre gonflable (18, 19) étant montée entre lesdits éléments d'espacement (21, 23).

4. Unité d'extraction selon la revendication 3, dans laquelle chacun desdits éléments d'espacement (21, 23) a une épaisseur, mesurée transversalement audit axe longitudinal (7), qui permet à la gaine (13) et au conduit d'alimentation (9) d'osciller l'un par rapport à l'autre autour d'un axe de rotation transversal audit axe longitudinal (7).

5. Unité d'extraction selon l'une quelconque des revendications précédentes, dans laquelle le dispositif de fermeture (11) comprend, en outre, au moins deux éléments d'espacement (21, 23) annulaires intercalés entre la gaine (13) et le conduit d'alimentation (9) et verrouillés axialement le long dudit axe longitudinal (7) pour limiter axialement la chambre gonflable (18, 19) ; chaque élément d'espacement (21, 23) comprenant deux corps (24, 25) annulaires concentriques l'un à l'autre, qui sont sensiblement en contact l'un avec l'autre, un bord supérieur (29) ou inférieur (30) relatif de ladite gaine de protection (28) étant interposé entre eux.

6. Unité d'extraction selon l'une quelconque des revendications précédentes, dans laquelle le dispositif de fermeture (11) comprend une pluralité de chambres gonflables (18, 19) agencées successivement le long dudit axe longitudinal (7), et au moins une gaine de protection (28) montée sur lesdites chambres gonflables (18, 19) pour protéger les chambres gonflables (18, 19) de l'attaque chimique dudit biogaz.

7. Unité d'extraction selon la revendication 6, dans laquelle le dispositif de fermeture (11) comprend, en outre, une pluralité d'éléments d'espacement (21, 22, 23) annulaires intercalés entre la gaine (13) et le conduit d'alimentation (9) et verrouillés axialement le long dudit axe longitudinal (7) ; chaque chambre gonflable (18, 19) étant limitée axialement par deux desdits éléments d'espacement (21, 22, 23) relatifs.

8. Unité d'extraction selon la revendication 7, dans laquelle chaque élément d'espacement (21, 23) d'au moins une partie desdits éléments d'espacement (21, 22, 23) comprend deux corps (24, 25) annulaires concentriques l'un à l'autre, qui sont sensiblement en contact l'un avec l'autre, un bord supérieur (29) ou inférieur (30) de ladite gaine de protection (28) relative étant interposé entre eux.

9. Unité d'extraction selon l'une quelconque des revendications précédentes et comprenant, en outre, un dispositif d'alimentation pneumatique communiquant avec ladite chambre gonflable (18, 19).

10. Unité d'extraction selon l'une quelconque des revendications précédentes et comprenant, en outre, un couvercle pour fermer ladite gaine (13) hermétiquement.

11. Unité d'extraction selon l'une quelconque des revendications 1 à 9, dans laquelle la gaine (13) est reliée à un autre conduit (16) pour délivrer le biogaz à un dispositif de collecte dudit biogaz.

12. Unité d'extraction selon l'une quelconque des revendications 1 à 9 et comprenant, en outre, un dispositif de filtration pour fermer la gaine (13) ; le dispositif de filtration étant adapté pour supprimer les substances malodorantes présentes dans le biogaz et pour permettre l'émission du biogaz dans l'environnement extérieur.
